Europäisches Patentamt

European Patent Office

Office européen des brevets

(11) Veröffentlichungsnummer: **0 145 009**
**B1**

(12) **EUROPÄISCHE PATENTSCHRIFT**

(45) Veröffentlichungstag der Patentschrift:
**13.07.88**

(21) Anmeldenummer: **84115124.4**

(22) Anmeldetag: **11.12.84**

(51) Int. Cl.⁴: **B 60 C 11/11, B 60 C 11/08**

(54) **Vorderradreifen für ein Motorrad.**

(30) Priorität: **12.12.83 DE 8335597 U**

(43) Veröffentlichungstag der Anmeldung:
**19.06.85 Patentblatt 85/25**

(45) Bekanntmachung des Hinweises auf die Patenterteilung:
**13.07.88 Patentblatt 88/28**

(84) Benannte Vertragsstaaten:
**DE FR GB IT**

(56) Entgegenhaltungen:
**FR - A - 2 452 391**
**GB - A - 282 181**
**US - A - 2 770 279**

**AUTOMOTIVE ENGINEERING, Band 92, Nr. 7, Juli 1984,
Seiten 76-77, Dallas, Texas, US; "Radial tires for
high-performance motorcycles"**

(73) Patentinhaber: **METZELER Gesellschaft mit
beschränkter Haftung, Gneisenaustrasse 15,
D-8000 München 50 (DE)**

(72) Erfinder: **Haas, Johann, Westendstrasse 263,
D-8000 München 2 (DE)**

(74) Vertreter: **Michelis, Theodor, Dipl.-Ing.,
Gneisenaustrasse 15, D-8000 München 50 (DE)**

## Beschreibung

Die Erfindung betrifft einen Reifen für ein Motorradvorderrad der im Oberbegriff des Anspruchs 1 angegebenen Gattung. Ein derartiger Reifen ist z.B. aus der GB-A 282 181 bekannt.

Die üblichen Profile der Laufflächen von Motorradreifen haben insofern Nachteile, als es zu einem «Aufschwimmen» des Reifens bei Pfützen auf der Fahrbahn, dem berüchtigten «Aquaplaning», kommen kann. Ausserdem ist die Fahrstabilität noch verbesserungsfähig.

Der Erfindung liegt deshalb die Aufgabe zugrunde, einen Reifen der angegebenen Gattung zu schaffen, bei dem die oben erwähnten Nachteile nicht auftreten. Insbesondere soll ein Reifen vorgeschlagen werden, der in bezug auf Fahrstabilität und Aquaplaning-Gefährdung bessere Eigenschaften hat.

Dies wird erfindungsgemäss durch die im kennzeichnenden Teil des Anspruchs 1 angegebenen Merkmale erreicht.

Zweckmässige Ausführungsformen sind in den Unteransprüchen zusammengestellt.

Die mit der Erfindung erzielten Vorteile beruhen darauf, dass die schräggestellten, etwa parallelogrammförmigen Blöcke von der Mittelrille ausgehend bis weit in die Flanken hinein reichen und durch entsprechende, pfeilförmig verlaufende Querrillen voneinander getrennt sind. Diese leichte Schrägstellung der Profilklötze sorgt für ein gleichmässiges Abrollen des Reifens mit entsprechend gleichmässiger Verteilung des Bodendrucks. Dies führt bei Hochgeschwindigkeit zu einem hervorragenden Geradeauslauf mit optimaler Fahrstabilität.

Auch die Kurvenstabilität ist verbessert, da bei Kurvenfahrt das Profil durch Seitenkräfte beansprucht wird, die durch die schubsteifen Klötze mit wenig Bewegung übertragen werden und deshalb einen stabilen Eindruck vermitteln.

Da sich die Querrillen von der Mittelrille bis in die Flanken erstrecken, ergibt sich ein einwandfreies Nassrutschverhalten und damit nur eine vergleichsweise geringe Aquaplaning-Gefahr. Beim Überfahren einer Pfütze wird das Wasser durch die Mittelrille und die Querrillen nach aussen verdrängt, so dass die direkt nach aussen führenden, geraden «Strömungskanäle» das befürchtete Aufschwimmen des Reifens verhindern.

Die erwähnte gleichmässige Bodendruckverteilung führt zu einer Reduzierung des spezifischen Bodendrucks und damit zu Vorteilen in der Haftung des Reifens auf der Fahrbahn. Ausserdem ergibt sich dadurch eine Verlängerung der Lebensdauer, da beim Vorderradreifen der Abrieb im wesentlichen durch Schlupfbewegungen entsteht, die beim Abrollen des Reifens auftreten, dem sogenannten «Formschlupf». Diese Schlupfbewegungen sind aufgrund der angegebenen Profilierung wesentlich geringer, so dass sich eine entsprechende Reduzierung des Abriebes und damit eine Verlängerung der Lebensdauer ergibt.

Die Erfindung wird im folgenden anhand eines Ausführungsbeispiels unter Bezugnahme auf die beiliegenden, schematischen Zeichnungen näher erläutert. Es zeigen:

Fig. 1 eine perspektivische Ansicht eines Vorderrades eines Motorrades mit Felge und Luftreifen, und

Fig. 2 eine Draufsicht auf das Profil dieses Vorderradreifens.

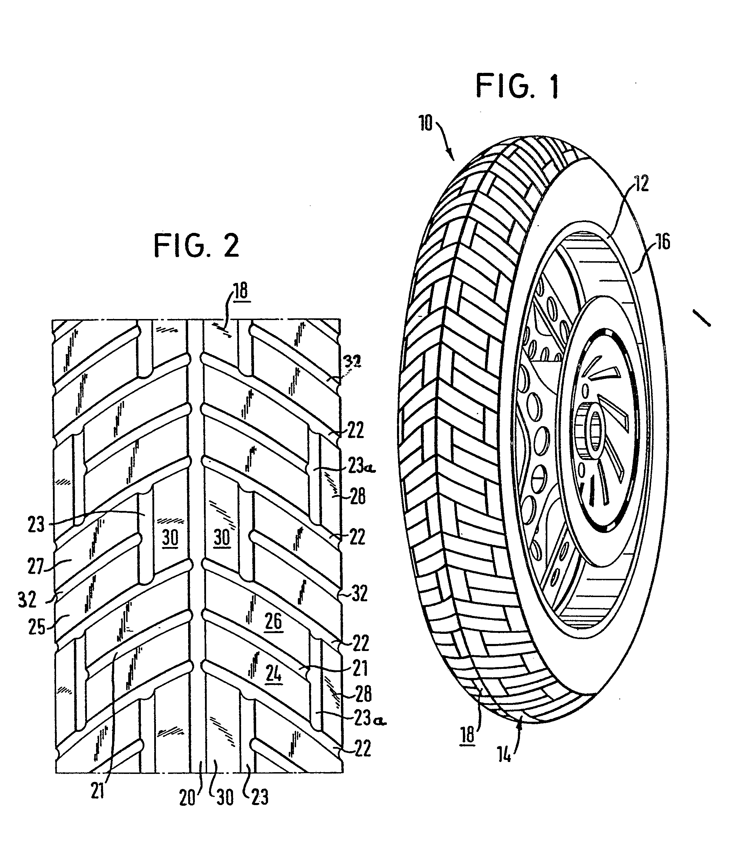

Das in Fig. 1 dargestellte, allgemein durch das Bezugszeichen 10 angedeutete Vorderrad eines Motorrades weist eine übliche Felge 12 und einen Luftreifen 14 aus einem nicht näher dargestellten Unterbau 16 und einer profilierten Lauffläche 18 auf.

Wie man in Fig. 2 erkennt, hat die Lauffläche 18 ein Profil, das symmetrisch zu einer in Umfangsrichtung der Lauffläche umlaufenden Mittelrille 20 ist.

Von dieser Mittelrille 20 gehen symmetrisch erste Querrillen 22, die bis in die Flanken des Luftreifens 14 hineinreichen, sowie kurze zweite Querrillen 21 aus. Diese Querrillen 21, 22 sind in Traktionsrichtung des Reifens pfeilförmig abgeschrägt, wobei die Pfeilwinkel etwa 60° bis 85° zur Mittelrille 20 geneigt sind, d.h. gemäss der Darstellung in Fig. 1 dreht sich die Lauffläche 18 des Reifens in der Zeichenebene nach oben.

Zwischen den Querrillen 21, 22 sind etwa parallelogrammförmige Klötze 24, 26, 28, 30 angeordnet. Dabei sind jeweils drei Klötze zu dem aus Fig. 2 ersichtlichen Muster zwischen zwei durchgehenden ersten Querrillen 22 angeordnet, wobei sich die beiden Musterkonfigurationen abwechseln.

Bei der ersten Musterkonfiguration verlaufen, ausgehend von der Mittelrille 20, jeweils zwei abgeschrägte, parallelogrammförmige innere Quer-Klötze 24, 26 radial nach aussen. Diese beiden Klötze 24, 26 sind parallel zueinander und werden aussen durch einen weiteren, parallelogrammförmigen äusseren Längs-Klotz 28 abgeschlossen, der in Umfangsrichtung verläuft. Die beiden parallelen, etwa in radialer Richtung verlaufenden inneren Quer-Klötze 24, 26 sind voneinander durch eine kurze zweite Querrille 21 und von dem in Umfangsrichtung verlaufenden äusseren Längs-Klotz 28 durch eine kurze äussere Umfangsrille 23a getrennt.

Bei der folgenden Musterkonfiguration verläuft, jeweils symmetrisch zur Mittelrille 20, ein einzelner, parallelogrammförmiger innerer Längs-Klotz 30 in Umfangrichtung, an den sich axial nach aussen zwei parallel zueinander verlaufende Quer-Klötze 25, 27 anschliessen, die bis in die Flanke des Reifens hineinreichen. Auch diese Klötze sind, ähnlich wie bei der ersten Musterkonfiguration, durch eine kurze erste Umfangsrille 23 und eine kurze dritte Querrille 32 voneinander getrennt.

Die etwa in axialer Richtung verlaufenden, abgeschrägten Quer-Klötze 24, 26 bzw. 25, 27 haben die gleiche Querschnittsfläche; dies gilt auch für die in Umfangsrichtung verlaufenden Längs-Klötze 28, 30. Die Abmessungen der Klötze sind so aufeinander abgestimmt, dass die in Umfangsrichtung verlaufenden Längs-Klötze 28, 30 eine Länge haben, die der Gesamtbreite von zwei in axialer Richtung verlaufenden Quer-Klötzen 24, 26 bzw. 25, 27 einschliesslich der zugehörigen Querrille 21 bzw. 32 entspricht.

**Patentansprüche**

1. Reifen für ein Motorrad-Vorderrad, mit einem Unterbau und mit einer profilierten Lauffläche, mit einer in Umfangsrichtung umlaufenden Mittelrille (20), mit seitlichen, symmetrisch zur Mittelrille angeordneten Klötzen (24 bis 28, 30), mit zwischen den Klötzen verlaufenden Umfangs- und Querrillen, wobei die von der Mittelrille (20) ausgehenden, zueinander parallelen Querrillen (21, 22) in Umfangsrichtung pfeilförmig angeordnet sind, dadurch gekennzeichnet, dass die Pfeilwinkel etwa 60° bis 85° zur Mittelrille (20) geneigt sind und dass die durch die Umfangs- und Querrillen gebildeten Klötze parallelogrammförmig sind, derart, dass jeweils abwechselnd zwischen zwei in Umfangsrichtung aufeinanderfolgenden, von der Mittelrille (20) bis zu den Flanken durchgehenden ersten Querrillen (22) zum einen ein in seiner Haupterstreckung parallel zur Mittelrille (20) angeordneter, axial aussen von einer inneren Umfangsrille (23) begrenzter innerer Längsklotz (30) und zum anderen zwei durch eine zur ersten parallele, zweite Querrille (21) getrennte, in ihrer Haupterstreckung axial ausgerichtete innere Querklötze (24, 26) angeordnet sind.

2. Reifen nach Anspruch 1, dadurch gekennzeichnet, dass die inneren Querklötze (24, 26) axial aussen jeweils von einer, die beiden benachbarten ersten durchgehenden Querrillen (22) verbindenden äusseren Umfangsrille (23a) begrenzt werden, um einen in seiner Haupterstreckung in Umfangsrichtung ausgerichteten äusseren Längsklotz (28) zu bilden, so dass die Längsklötze (28, 30) abwechselnd an der Mittelrille (20) und an der Flanke angeordnet sind.

3. Reifen nach Anspruch 1 oder 2, dadurch gekennzeichnet, dass von der inneren Umfangsrille (23) jeweils eine bis zur Flanke reichende dritte Querrille (32) ausgeht, um in ihrer Haupterstreckung axial ausgerichtete äussere Querklötze (25, 27) zu bilden.

**Claims**

1. Tyre for a motorcycle front wheel, with a carcass and with a profiled tread, with a central groove (20) extending round in the circumferential direction, with lateral blocks (24 to 28, 30) arranged symmetrically relative to the central groove, and with circumferential and transverse grooves extending between the blocks, the transverse grooves (21, 22), which start from the central groove (20) and are parallel to one another, being arranged in an arrow-shaped manner in the circumferential direction, characterized in that the arrow angles are inclined at approximately 60° to 85° relative to the central groove (20), and in that the blocks formed by the circumferential and transverse grooves are parallelogram-shaped, in such a way that between every two first transverse grooves (22) succeeding one another in the circumferential direction and continuous from the central groove (20) up to the flanks are arranged alternately, on the one hand, an inner longitudinal block (30) arranged with its main extension parallel to the central groove (20) and limited axially on the outside by an inner circumferential groove (23) and, on the other hand, two inner transverse blocks (24, 26) separated by a second transverse groove (21) parallel to the first and aligned with their main extension in an axial direction.

2. Tyre according to Claim 1, characterized in that the inner transverse blocks (24, 26) are respectively limited axially on the outside by an outer circumferential groove (23a) connecting the two adjacent first continuous transverse grooves (22), in order to form an outer longitudinal block (28) aligned with its main extension in the circumferential direction, so that the longitudinal blocks (28, 30) are arranged alternately at the central groove (20) and at the flank.

3. Tyre according to Claim 1 or 2, characterized in that a third transverse groove (32) extending up to the flank starts from the respective inner circumferential groove (23), in order to form outer transverse blocks (25, 27) aligned with their main extension in the axial direction.

**Revendications**

1. Pneumatique de roue avant de motocyclette, comprenant une carcasse et une bande de roulement à sculptures, ayant une strie médiane (20) faisant tout le tour dans la direction périphérique, des barrettes (24 à 28, 30) latérales et disposées symétriquement par rapport à la strie médiane, des stries périphériques et transversales s'étendant entre les barrettes, les stries transversales (21, 22), partant de la strie médiane (20) et parallèles entre elles, étant disposées sous la forme de chevrons dans la direction périphérique, caractérisé en ce que les chevrons font un angle de 60 à 85° environ avec la strie médiane (20), en ce que les barrettes formées par les stries périphériques et transversales sont en forme de parallélogramme de manière à ménager, en alternance, entre deux premières stries transversales (22) se succédant dans la direction périphérique et allant de la strie médiane (20) jusqu'aux flancs, d'une part une barrette longitudinale (30) intérieure, délimitée extérieurement et axialement par une strie périphérique (23) intérieure, et d'autre part deux barrettes transversales (24, 26) intérieures, séparées par une deuxième strie transversale (21) parallèle aux premières et dont les étendues principales sont alignées axialement.

2. Pneumatique suivant la revendication 1, caractérisé en ce que les barrettes transversales (24, 26) intérieures sont délimitées extérieurement et axialement par une strie périphérique (23a) extérieure, reliant les deux premières stries transversales (22) continues, qui sont voisines, pour former une barrette longitudinale (28) extérieure, dont l'étendue principale est alignée dans la direction périphérique, de sorte que les barrettes longitudinales (28, 30) sont disposées alternativement du côté de la strie médiane (20) et du côté des flancs.

3. Pneumatique suivant la revendication 1 ou 2, caractérisé en ce que de la strie périphérique (23) intérieure part une troisième strie transversale (32) allant jusqu'aux flancs, pour former des barrettes transversales (25, 27) extérieures, dont l'étendue principale est alignée axialement.

FIG. 1

FIG. 2